# EUROPÄISCHE PATENTANMELDUNG

(11) **EP 3 236 513 A1**
(43) Veröffentlichungstag der Anmeldung: **25.10.2017**
(21) Anmeldenummer: 16166658.1
(22) Anmeldetag: 22.04.2016
(51) Int. Cl.: H01M 2/20, H01M 2/30, H01M 10/04, H01M 10/052, H01M 10/0565, H01M 10/0566, H01M 10/0587, H01M 4/48

(54) **ELEKTRODENANORDNUNG FÜR EINE BATTERIEZELLE**

(71) Anmelder: HILTI Aktiengesellschaft, 9494 Schaan (LI)
(72) Erfinder: Ender, Moses, 9470 Buchs (CH)
(74) Vertreter: Hilti Aktiengesellschaft Corporate Intellectual Property

(57) **Zusammenfassung**

Eine Batteriezelle **1** hat ein Elektrodenpaket **5,** welches aus Elektrodenpaaren **6** zusammengesetzt ist, welche wiederum eine negative Elektrode **7** und eine positive Elektrode **8** aufweisen. Die negativen Elektroden **7** haben einen streifenförmigen Träger **9,** ein erstes aktives Material auf der Oberfläche **12** des streifenförmigen Trägers **9** und wenigstens eine erste Kontaktfahne **15.** Die positiven Elektroden **8** haben einen streifenförmigen Träger **9,** ein zweites aktives Material auf der Oberfläche **18** des streifenförmigen Trägers **9,** wenigstens eine zweite Kontaktfahne **19.** Die Elektrodenpaaren **6** sind aus einer der negativen Elektroden **7** und einer der positiven Elektroden **8** zusammengesetzt. Das Elektrodenpaket **5** weist wenigstens zwei der Elektrodenpaare **6** aufeinanderliegend angeordnet auf. Das Elektrodenpaket **5** ist gewickelt. Das Elektrodenpaket **5** ist in einem Elektrolyt getränkt. Das getränkte Elektrodenpaket **5** ist in einem Gehäuse **2** eingefasst. Ein erster elektrischer Zellenkontakt 4 ist elektrisch mit den ersten Kontaktfahnen **15** verbunden und ein zweiter elektrischer Zellenkontakt **3** ist elektrisch mit den zweiten Elektroden-Kontaktfahnen **19** verbunden.

## Beschreibung

### GEBIET DER ERFINDUNG

Die vorliegende Erfindung betrifft eine Elektrodenanordnung für eine Batteriezelle, insbesondere eine Batteriezelle für ein Elektrowerkzeug.

Elektrowerkzeuge belasten eine Batteriepaket mit sehr hohen Strompulsen, sowohl mit kurzen Pulsen sehr hoher Ströme als auch längere Pulse hoher Ströme. Die Pulse können sich auch mit nur kurzen Pausen schnell wiederholen. Das Batteriepaket soll sich dabei nur wenig aufheizen, um eine ausreichende Lebensdauer des Batteriepakets zu erreichen. Die Lebensdauer zeigt sich insbesondere in einem schnellen Abfall der Kapazität nach weniger als hundert Lade- und Entlade Zyklen.

### OFFENBARUNG DER ERFINDUNG

Die erfindungsgemäße Batteriezelle hat ein Elektrodenpaket, welches aus Elektrodenpaaren zusammengesetzt ist, welche wiederum eine negative Elektrode (Anode) und eine positive Elektrode (Kathode) aufweisen. Die Anoden haben einen streifenförmigen Träger, ein erstes aktives Material auf der Oberfläche des streifenförmigen Trägers und wenigstens eine Anoden-Kontaktfahne. Die Kathoden haben einen streifenförmigen Träger, ein zweites aktives Material auf der Oberfläche des streifenförmigen Trägers, wenigstens eine Kathoden-Kontaktfahne. Die Elektrodenpaare weisen eine der Anoden und eine der Kathoden auf. Die Kathode ist der Anode gegenüber derart angeordnet, dass der Anoden-Kontaktfahne kein zweites aktives Material der Kathode gegenüberliegt. Die Kathode weist dazu beispielsweise eine von dem zweiten aktiven Material ausgenommenen Bereich auf oder ist entsprechend kürzer, falls die Anoden-Kontaktfahnen am schmalen Rand angeordnet sind. Das Elektrodenpaket weist wenigstens zwei der Elektrodenpaare aufeinanderliegend angeordnet auf. Das Elektrodenpaket ist gewickelt. Die Batteriezelle ist mit einem flüssigen oder gelfömrigen Elektrolyt gefüllt. Das Elektrodenpaket ist in einem Gehäuse eingefasst. Ein erster elektrischer Zellenkontakt ist elektrisch mit den Anoden-Kontaktfahnen verbunden und ein zweiter elektrischer Zellenkontakt ist elektrisch mit den Kathoden-Kontaktfahnen verbunden.

Die Batteriezelle hat aufgrund der Verwendung mehrerer parallel geschalteter Anoden und Kathoden geringere innere ohmsche Verluste. Die höhere Anzahl von Kontaktfahnen verkürzt die Leitungsstrecken innerhalb der Batteriezelle. Die Verwendung identischer Anoden und Kathoden innerhalb der Batteriezelle erleichtert die Fertigung verglichen mit Elektrodenanordnungen mit einer höheren Anzahl von Kontaktfahnen an einer einzelnen Elektrode.

Die Anoden und Kathoden eines Elektrodenpaars sind vorzugsweise näherungsweise gleich lang. Die Kathode ist vorzugsweise so lang, wie die mit ersten aktiven Material beschichtete Oberfläche. Beispielsweise kann die Kathode um die Breite der Anoden-Kontaktfahnen kürzer als die Anode sein.

Eine Ausführungsform sieht vor, dass die Anoden-Kontaktfahnen zu den Kathoden-Kontaktfahnen entlang einer Längskante des Trägers versetzt angeordnet sind. Die Anoden und Kathoden sind aufgewickelt. Die Betrachtung entlang der Längskante ist entsprechend entlang dem Wickelpfad. Vorzugsweise sind zwischen den Anoden-Kontaktfahnen und den Kathoden-Kontaktfahnen sowohl die Anode als auch die Kathode mit deren aktivem Material beschichtet.

Eine Ausgestaltung sieht vor, dass die Anoden jeweils eine Anoden-Kontaktfahne an beiden Längsenden aufweisen und die Kathoden jeweils eine Kathoden-Kontaktfahne in der Mitte der Kathode aufweisen.

Eine Ausgestaltung sieht vor, dass das Elektrodenpaket zwei oder mehr Elektrodenpaare aufweist, beispielsweise genau zwei Elektrodenpaare.

Eine Ausgestaltung sieht vor, dass die eine der Schmalkanten des Elektrodenpakets innerhalb des gewickelten Elektrodenpakets und die andere der Schmalkanten des Elektrodenpakets außerhalb des gewickelten Elektrodenpakets ist. Das Elektrodenpaket ist von einem Ende und nicht von der Mitte aus gewickelt.

Eine Ausgestaltung sieht vor, dass das zweite aktive Material aus einer Lithium-basierten Metalloxid-Verbindungen besteht. Der Elektrolyt kann in aprotischem Lösungsmittel gelöste Lithiumsalze aufweisen.

Batteriepaket für ein Elektrowerkzeug mit wenigstens drei in Serie geschalteten Batteriezellen und einer Überwachungseinheit zum Überwachen des Ladezustands der individuellen Batteriezellen.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Batteriezelle
- Fig. 2: ein abgerolltes Elektrodenpaket
- Fig. 3: ein gewickeltes Elektrodenpaket
- Fig. 4: eine Anode
- Fig. 5: eine Kathode
- Fig. 6: eine Kathode
- Fig. 7: eine batteriegespeiste Handwerkzeugmaschine

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

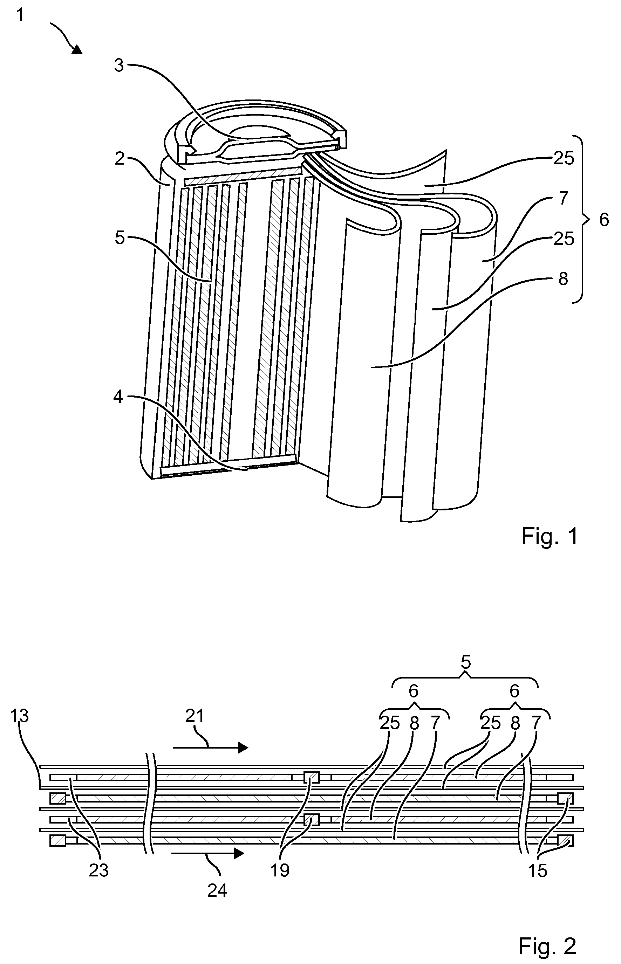

Fig. 1 zeigt schematisch den Aufbau eine Batteriezelle **1.** Die Batteriezelle **1** hat ein geschlossenes zylindrisches Gehäuse **2.** Ein Durchmesser der Batteriezelle **1** liegt im Bereich zwischen 12 mm und 27 mm. Die Höhe der Batteriezelle **1** liegt vorzugsweise im Bereich zwischen 65 mm und 70 mm. Eine besonders bevorzugte Zelle hat einen Durchmesser zwischen 21 mm und 23 mm und eine Höhe zwischen 65 mm und 70 mm.

Die Batteriezelle **1** hat einen elektrischen (Zellen-) Kontakt **3** der einer elektrischen Polarität an der einer Stirnseite des zylindrischen Gehäuses **2** und einen elektrischen (Zellen-) Kontakt **4** der anderen elektrischen Polarität auf der anderen Stirnseite des zylindrischen Gehäuses **2.** Die elektrischen Kontakte **3, 4** können durch ebene Flächen, angeschweißte Fahnen oder wie beispielhaft für den einen Kontakt **3** dargestellt als erhabene Struktur ausgebildet sein.

Die Batteriezelle **1** hat ein eng gewickeltes Elektrodenpaket **5** innerhalb des Gehäuses **2.** Das Elektrodenpaket **5** ist mit dem flüssigen oder gelförmigen Elektrolyt durchtränkt. Die Elektroden und der Elektrolyt bilden die galvanische Zelle, welche reversibel elektrische Energie speichern und elektrische Energie abgeben kann.

Die Batteriezelle **1** ist mit einem flüssigen oder gelartigen Elektrolyt gefüllt. Der Elektrolyt kann in einem aprotischem Lösungsmittel gelöste Lithiumsalze enthalten. Ein geeignetes Salz ist beispielsweise Lithiumhexafluorophosphat. Geeignet Lösungsmittel sind beispielsweise Ethylencarbonat, Propylencarbonat und Dimethylcarbonat.

Ein beispielhaftes Elektrodenpaket **5** ist abgerollt in Fig. 2 dargestellt. Das Elektrodenpaket **5** beinhaltet zwei Elektrodenpaare **6.** Jedes Elektrodenpaar **6** hat eine flächige negative Elektrode **7** (Anode beim Entladen) und eine flächige positive Elektrode **8** (Kathode beim Entladen). Die Elektrodenpaare **6** sind vorzugsweise in ihrer Ausgestaltung identisch, z.B. in ihren Zusammensetzungen und ihren Abmessungen. Die Beschreibung beschränkt sich daher auf ein einzelnes Elektrodenpaar **6.**

Die Anode **7** hat einen elektrisch leitfähigen Träger **9.** Beispielsweise ist der Träger **9** aus Kupfer. Der Träger **9** ist eine lange, dünne Folie. Eine beispielhafte Länge **10** des Trägers **9** liegt im Bereich zwischen 25 cm und 200 cm, eine Höhe **11** des Trägers **9** entspricht etwa der Höhe der Batteriezelle **1,** eine Dicke des Trägers **9** ist vorzugsweise geringer als 50 µm, z.B. geringer als 20 µm. Eine Oberfläche des Trägers **9** besteht daher im Wesentlichen nur aus den beiden gegenüberliegenden größten Seitenflächen **12,** welche von den Schmalkanten **13** und den Längskanten **14** begrenzt ist. Die beiden Seitenflächen **12** des Trägers **9** sind mit einem aktiven Material beschichtet. Das aktive Material bedeckt nahezu die gesamte Oberfläche des Trägers **9.** Das aktive Material der Anode **7** kann beispielsweise Graphit sein.

Die Anode **7** ist mit einer oder mehreren (Anoden-) Kontaktfahnen **15** versehen. Die Anoden-Kontaktfahnen **15** sind schmale Streifen aus Metall, z.B. Nickel, welche in, vorzugsweise unmittelbaren, elektrischen Kontakt mit dem Träger **9** sind. Die Anoden-Kontaktfahnen **15** können beispielsweise durch Ultraschallschweißen an dem Träger **9** befestigt und mit diesem elektrisch kontaktiert werden. Die Anode **7** wird über die Anoden-Kontaktfahnen **15** mit dem Kontakt **4** der Batteriezelle **1** elektrisch verbunden. Die Anoden-Kontaktfahnen **15** sind beispielsweise parallel zu den Schmalkanten **13** des Trägers **9** orientiert und stehen längs der Höhe **11** über den Träger **9** hinaus. Die beispielhafte Anode **7** hat genau zwei Anoden-Kontaktfahnen **15,** welche an den Schmalkanten **13** des Trägers **9** angeordnet sind. Die Anoden-Kontaktfahnen **15** befinden sich somit an den äußeren Extremitäten entlang der Längskante **14** des Trägers **9.** Die Seitenflächen **12** zwischen den Anoden-Kontaktfahnen **15** sind vollständig mit dem aktiven Material beschichtet. Einzig die Bereiche **16** unmittelbar an den Anoden-Kontaktfahnen **15** sind unbeschichtet, d.h. frei von dem aktiven Material, um einen unmittelbaren Kontakt zwischen dem aktiven Material und den Kontaktfahnen zu unterbinden. Die unbeschichteten Bereiche **16** können etwas breiter als die Anoden-Kontaktfahnen **15** sein. Die Anoden-Kontaktfahnen **15** bedecken nur einen Teil des unbeschichteten Bereichs **16.**

Der Aufbau der Kathode **8** ist dem Aufbau der Anode **7** ähnlich. Die Kathode **8** hat einen elektrisch leitfähigen Träger **17.** Beispielsweise ist der Träger **17** aus Aluminium. Der Träger **17** der Kathode **8** ist ebenfalls eine lange, dünne Folie. Die geometrischen Abmessungen der beiden Träger **9, 17** sind näherungsweise identisch, insbesondere die Länge **10** und die Höhe **11.** Die Kathode **8** kann auch etwas weniger lang, beispielsweise um weniger als 10 % kürzer wie die Anode **7** sein. Eine Oberfläche des Trägers **17** besteht im Wesentlichen nur aus den beiden gegenüberliegenden größten Seitenflächen **18.** Die beiden Seitenflächen **18** des Trägers **17** sind mit einem aktiven Material beschichtet. Das aktive Material bedeckt nahezu die gesamte Oberfläche des Trägers **17.** Das aktive Material der Kathode **8** besteht aus Lithium-basierten Metalloxid-Verbindungen, z.B. Lithium-Manganoxid, Lithium-Nickelmanganoxid, Lithium-Nickeloxid, Lithium-Nickelkobaltaluminiumoxid, Lithium-Eisenphosphat. Besonders bevorzugt sind Lithium-Metalloxid Verbindungen, welche eine Spinell Struktur ausbilden.

Die Kathode **8** ist mit (Kathoden-) Kontaktfahnen **19** versehen. Die Kontaktfahnen **19** sind schmale Streifen aus Metall, z.B. Aluminium, welche in, vorzugsweise unmittelbaren, elektrischen Kontakt mit dem Träger **17** sind. Die Kathode **8** wird über die Kathoden-Kontaktfahnen **19** mit dem Kontakt **3** der Batteriezelle **1** elektrisch verbunden. Die Kathoden-Kontaktfahnen **19** sind beispielsweise parallel zu den Schmalkanten **20** des Trägers **17** orientiert und stehen längs der Höhe **11** über den Träger **17** hinaus. Die beispielhafte Kathode **8** hat genau eine Kathoden-Kontaktfahne **19,** welche längs der Längsrichtung **21** des Trägers **17** in der Mitte des Trägers **17** angeordnet ist. Der Träger **9** ist in dem Bereich **22** der Kathoden-Kontaktfahne **19** unbeschichtet, d.h. frei von dem aktiven Material. Der unbeschichtete Bereich **22** kann vorzugsweise etwas breiter als die Kathoden-Kontaktfahne **19** sein.

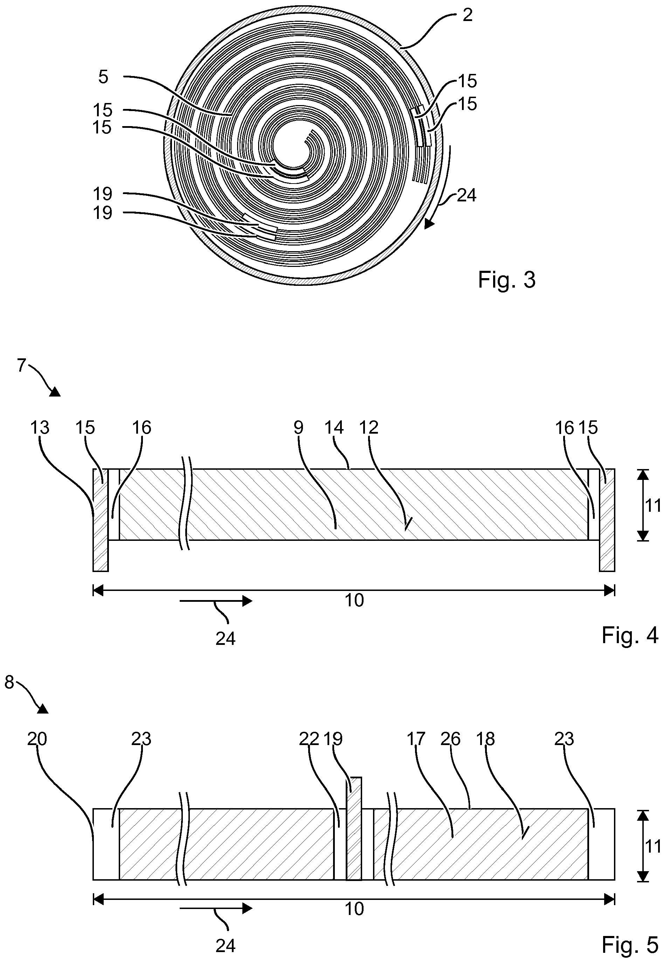

Die in Fig.5 beispielhaft dargestellte Kathode **8** hat zwei von dem aktiven Material ausgesparte Bereiche **23.** In den ausgesparten Bereiche **23** sind die Seitenflächen **18** nicht mit dem aktiven Material bedeckt. Die ausgesparten Bereiche **23** sind ferner nicht mit einem Kontakt versehen, sondern einfach ein inaktiver Bereich mit dem blanken Träger **17.** Der ausgesparte Bereich **23** der Kathode **8** hat vorzugsweise die gleichen Abmessungen wie einer der unbeschichteten Bereiche **16** um die Anoden-Kontaktfahnen **15.** Die Anordnung des ausgesparten Bereichs **22** der Kathode **8** entlang der Längsrichtung **21** und der Wickelrichtung **88** fällt mit der Anordnung des unbeschichteten Bereichs **16** der Anode **7** zusammen.

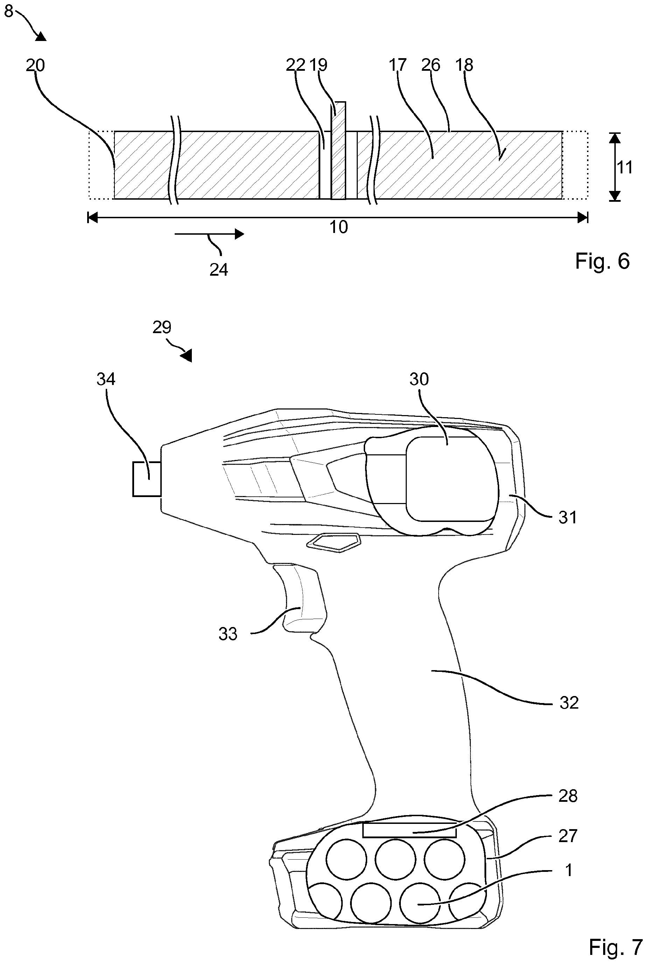

Bei dem illustrierten Beispiel sind die beiden ausgesparten Bereiche am Anfang und am Ende des Trägers **17.** Die Anode **7** und die Kathode **8** können somit derart aufeinandergelegt werden, dass die Anoden-Kontaktfahnen **15** dem ausgesparten Bereich gegenüberliegen. Die ausgesparten Bereiche sind zwar nachteilig in Hinblick auf die Kapazität der Batteriezelle **1,** steigern aber signifikant die Lebensdauer der Batteriezelle **1.** Anstelle der ausgesparten Bereiche kann die Kathode **8** um diese ausgesparten Bereiche gekürzt ausgebildet werden (Fig. 6). Die Kathode **8** kann demzufolge etwas kürzer wie die Anode **7** sein.

Die Anode **7** und die Kathode **8** sind vorteilhafterweise durch einen Separator **24** auf Abstand gehalten. Der Separator **24** ist beispielsweise eine poröse Folie aus einem elektrisch isolierenden Material. Die Poren sind für einen ungehinderten Ionenstrom des Elektrolyts ausreichend groß dimensioniert. Die Abmessung des Separators **24** entspricht weitgehend den Abmessungen der Träger **9.** Ein zweiter Separator **24** wird benötigt, da die noch voneinander abgewandten Seitenflächen **12, 18** bei dem aufgewickelten Elektrodenpaket **5** einander gegenüberliegen.

Das Elektrodenpaar **6** wird aus der Anode **7,** der Kathode **8** und vorteilhafterweise den Separatoren **24** gebildet. Die zwei bzw. drei flächigen Elemente sind im Wesentlichen zueinander zentriert ausgerichtet und aufeinandergelegt. Einer der Seitenflächen **12** der Anode **7** liegt eine der Seitenflächen **18** der Kathode **8** gegenüber. Die Schmalkanten **13** der Anode **7** und die Schmalkanten **20** der Kathode **8** liegen aufeinander oder sind in geringem Abstand. Die Anordnung gewährt einen maximalen Überlapp der aktiven Materialien. Vorzugsweise liegt dem gesamten aktiven Material der Kathode **8** aktives Material der Anode **7** gegenüber. Die mit dem ersten aktiven Material beschichteten Bereiche der Seitenfläche **12** der Anode **7** bedecken vollständig die mit dem zweiten aktiven Material beschichteten Bereiche der Seitenfläche **18** der Kathode **8.** Die Anoden-Kontaktfahnen **15** liegen den ausgesparten Bereichen der Kathode **8** gegenüber bzw. stehen über die Kathode **8** hinaus. Die Anoden-Kontaktfahnen **15** und die Kathoden-Kontaktfahnen **19** stehen vorzugsweise an den gegenüberliegenden Längskanten des Elektrodenpaars **6** über.

Das Elektrodenpaket **5** wird aus wenigstens zwei der Elektrodenpaare **6** gebildet. Die zwei Elektrodenpaare **6** werden zueinander zentriert aufeinandergelegt. Bei der beispielhaften Ausgestaltung liegen die Längskanten **14, 25** und die Schmalkanten **13, 20** der Anoden **7** und Kathoden **8** aneinander ausgerichtet übereinander. Die vorderen Anoden-Kontaktfahnen **15** und die vorderen ausgesparten Bereiche **23** der beiden Elektrodenpaare **6** liegen übereinander; die hinteren Anoden-Kontaktfahnen **15** und die hinteren ausgesparten Bereiche **23** der beiden Elektrodenpaare **6** liegen übereinander; die Kathoden-Kontaktfahnen **19** der beiden Elektrodenpaare **6** liegen übereinander. Bei dem aufgewickelten Elektrodenpaket **5** sind die übereinanderliegenden Elemente der drei Gruppen jeweils in unmittelbarer Nähe.

Das Elektrodenpaket **5** ist gewickelt. Die Wickelrichtung **88** entspricht der Längskante **14** oder Längsrichtung 21 bz der Elektroden **7, 8.** Vorzugsweise wird das Elektrodenpaket **5** von einer Schmalkante **13, 20** ausgehend gewickelt. Im Ergebnis hat das gewickelte Elektrodenpaket **5** eine Schmalkante **13, 20** im Zentrum und eine Schmalkante **13, 20** auf dem Umfang.

Die Anoden-Kontaktfahnen **15** der unterschiedlichen Elektrodenpaare **6** sind mit dem Zellenkontakt **4** verbunden. Die Kathoden-Kontaktfahnen **19** sind mit dem anderen Zellenkontakt **3** verbunden.

Die Lithium-Ionen Batteriezelle **1** ermöglicht die Abgabe sehr hoher Ströme über eine längere Zeitspanne. Die Ströme liegen beispielsweise über 40 Ampere für eine Dauer von wenigstens einer Minute. Ein Batteriepaket **26** kann aus mehreren dieser Batteriezellen **1** zusammengeschlossen werden. Das Batteriepaket **26** enthält zusätzlich eine Überwachungseinheit **27,** welche die Batteriezellen **1** vor zu tiefer Entladung oder zu hoher Ladung schützt. Das Batteriepaket **26** ist insbesondere für Elektroschrauber **28** und andere Elektrogeräte, wie zum Beispiel Winkelschleifer oder Kreissägen aufgrund der Batteriezellen **1** geeignet.

Die Elektrowerkzeuge haben einen Elektromotor **29,** der über das Batteriepaket **26** mit Strom versorgt wird. Der Elektromotor **29** ist in einem Maschinengehäuse **30** angeordnet, welches durch einen Handgriff **31** im Betrieb gehalten und geführt werden kann. Typischerweise ist an oder nahe dem Handgriff **31** ein Betriebsschalter **32,** über welchen der Elektromotor **29** eingeschaltet werden kann. Der Anwender kann den Betriebsschalter **32** vorzugsweise mit der den Handgriff **31** greifenden Hand betätigen. Das Elektrowerkzeug hat einen Werkzeughalter **33,** an welchem ein Werkzeug, z.B. ein Schrauberbit, ein Bohrer, eine Schleifscheibe, eine Trennscheibe, ein Sägeblatt etc. befestigt werden kann.

## Patentansprüche

1. Batteriezelle (1) mit:
negativen Elektroden (7), die einen ersten streifenförmigen Träger (9), ein erstes aktives Material auf der Oberfläche (12) des streifenförmigen Trägers (9) und wenigstens eine erste Kontaktfahne (15) aufweisen,
positive Elektroden (8), die einen zweiten streifenförmigen Träger (17), ein zweites aktives Material auf der Oberfläche (18) des streifenförmigen Trägers (9) und wenigstens eine zweite Kontaktfahne (19) aufweisen,
Elektrodenpaare (6), die eine der negativen Elektroden (7) und eine der positiven Elektroden (8) einander gegenüberliegend aufweisen, wobei den ersten Kontaktfahnen (15) der negativen Elektrode (7) gegenüberliegend kein zweites aktives Material der positiven Elektrode (8) vorgesehen ist,
einem Elektrodenpaket (5), das wenigstens zwei aufeinanderliegende der Elektrodenpaare (6) aufweist und wobei das Elektrodenpaket (5) gewickelt ist,
einem flüssigen oder gelförmigen Elektrolyt,
einem Gehäuse (2), in welchem das getränkte Elektrodenpaket (5) eingefasst ist,
einem negativen elektrischen Zellenkontakt (4), welcher elektrisch mit den ersten Kontaktfahnen (15) verbunden ist, und einem positiven elektrischen Zellenkontakt (3), welcher elektrisch mit den zweiten Kontaktfahnen (19) verbunden ist.

2. Batteriezelle (1) nach Anspruch 1, **dadurch gekennzeichnet, dass** die ersten Kontaktfahnen (15) zu den zweiten Kontaktfahnen (19) entlang einer Längskante (14) des Trägers (9) versetzt angeordnet sind.

3. Batteriezelle (1) nach Anspruch 1 oder 2, **dadurch gekennzeichnet, dass** die negativen Elektroden (7) jeweils eine erste Kontaktfahne (15) an einem der beiden Längsenden aufweisen und die positiven Elektroden (8) jeweils eine zweite Kontaktfahne (19) an dem anderen der beiden Längsenden aufweisen.

4. Batteriezelle (1) nach Anspruch 3, **dadurch gekennzeichnet, dass** jede negative Elektrode (7) genau einen erste Kontaktfahne (15) aufweist und jede positive Elektrode 8bz genau eine zweite Kontaktfahne 19bz aufweist.

5. Batteriezelle (1) nach Anspruch 1 oder 2, **dadurch gekennzeichnet, dass** die negativen Elektroden (7) jeweils eine erste Kontaktfahne (15) an beiden Längsenden aufweisen und die positiven Elektroden (8) jeweils eine zweite Kontaktfahne (19) im mittleren Drittel der positive Elektrode (8) aufweisen.

6. Batteriezelle (1) nach Anspruch 5, **dadurch gekennzeichnet, dass** jede negative Elektrode (7) genau zwei erste Kontaktfahnen (15) aufweist.

7. Batteriezelle (1) nach einem der vorhergehenden Ansprüche, **dadurch gekennzeichnet, dass** eine Länge des ersten streifenförmigen Trägers (9) und eine Länge des zweiten streifenförmigen Trägers (17) sich um weniger als 10 % unterscheiden.

8. Batteriezelle (1) nach einem der vorhergehenden Ansprüche, **dadurch gekennzeichnet, dass** der gesamten mit dem zweiten aktiven Material bedeckten Oberfläche der positiven Elektrode (8) eine mit dem ersten aktiven Material bedeckte Oberfläche der negativen Elektrode (7) gegenüberliegt.

9. Batteriezelle (1) nach einem der vorhergehenden Ansprüche, **dadurch gekennzeichnet, dass** das Elektrodenpaket (5) zwei oder mehr Elektrodenpaare (6) aufweist.

10. Batteriezelle (1) nach Anspruch 9, **dadurch gekennzeichnet, dass** das Elektrodenpaket (5) genau zwei Elektrodenpaare (6) aufweist.

11. Batteriezelle (1) nach einem der vorhergehenden Ansprüche, **dadurch gekennzeichnet, dass** die eine der Schmalkanten (20) des Elektrodenpakets (5) innerhalb des gewickelten Elektrodenpakets und die andere der Schmalkanten (20) des Elektrodenpakets (5) außerhalb des gewickelten Elektrodenpakets (5) ist.

12. Batteriezelle (1) nach einem der vorhergehenden Ansprüche, **dadurch gekennzeichnet, dass** das zweite aktive Material aus einer Lithium-basierten Metalloxid-Verbindungen besteht.

13. Batteriezelle (1) nach einem der vorhergehenden Ansprüche, **dadurch gekennzeichnet, dass** der Elektrolyt in aprotischem Lösungsmittel gelöste Lithiumsalze aufweist.

14. Batteriezelle (1) nach einem der vorhergehenden Ansprüche, **dadurch gekennzeichnet, dass** die Batteriezelle (1) einen Durchmesser zwischen 21 mm und 23 mm aufweist.

15. Batteriepaket für ein Elektrowerkzeug mit wenigstens drei in Serie geschalteter der Batteriezellen (1) nach einem der vorhergehenden Ansprüchen und einer Überwachungseinheit (27) zum Überwachen des Ladezustands der individuellen Batteriezellen (1).
